# EUROPEAN PATENT APPLICATION

(11) **EP 4 273 667 A1**
(43) Date of publication of application: **08.11.2023**
(21) Application number: 22171080.9
(22) Date of filing: 02.05.2022
(51) Int. Cl.: G06F 3/01, G06T 7/00

(54) **AUGMENTED REALITY SYSTEM**

(71) Applicant: Siemens Aktiengesellschaft, 80333 München (DE)
(72) Inventor: Labisch, Daniel, 76149 Karlsruhe (DE); MacWilliams, Asa, 82256 Fürstenfeldbruck (DE); Scherer, Tim, 76185 Karlsruhe (DE)
(74) Representative: Siemens Patent Attorneys

(57) **Abstract**

What is proposed is a method of displaying information on an augmented reality device (2), comprising:
a) By a user of the augmented reality device (2) or, automatically, by the augmented reality device (2) and/or a further device connected to the augmented reality device (2), determining a hologram (7) which is located within an augmented reality environment (6) of the augmented reality device (2),
b) By the user or by a further user, determining which information shall be displayed within the hologram (7),
c) Transmitting the determinations of the user, or of the user and the further user, to a computing unit which is physically separated from the augmented reality device (2),
d) Generating an image of the information determined by the user, or by the user and the further user, by the computing unit,
e) Transmitting the generated image to the augmented reality device (2),
f) Displaying the information determined by the user, or by the user and the further user, by displaying the received image by the augmented reality device (2).

## Description

The present disclosure is directed to a method of displaying information on an augmented reality device according to claim 1. Furthermore, the present disclosure is directed to an augmented reality system according to claim 12.

When an augmented reality device running augmented reality applications is used in an industrial application, e.g. for controlling and monitoring a technical plant, a field worker as a user of the augmented reality device needs manifold up-to-date information from multiple data sources - often at the same time.

Specific examples include:
- Overview of key indicators of a chemical process, e.g. overall throughput, concentrations of gases, fill levels of vats;
- Status information for particular instruments and actuators in a process plant, for example, the power used by a pump, the set point for a valve, or a measured temperature;
- Maintenance status information for a particular component, e.g. when a pump was last replaced, or when a motor was last serviced;
- Analytics data for individual components, e.g. a prediction that a particular component will need service within the next three days;
- Analytics data for larger parts of an entire production process, e.g. the relative efficiency of different production lines over time;
- Alarm indicators for particular components or sections of a plant / factory;
- Other asset related information, such as warranty information, supplier data, safety information, etc.

In addition, the user needs to easily integrate further information or modify his augmented reality views to be suitable for his tasks.

Basically, three different useful ways of making data available to an augmented reality device are known, assuming that the augmented reality device is located in a process plant or a factory, and it has already correctly determined its position and orientation:
Approach 1: The device connects locally, e.g. via Wi-Fi ^{®} and OPC/UA, to a local PCS (process control system), a PLC, or a SCADA system to read live data from sensors and process summary data. The augmented reality device then renders this information in a suitable format for displaying in augmented reality, e.g. a 3D gauge or chart. This is performed for all sets of information a user of the augmented reality device wishes to see. This approach is only useful for individual sensor values as the visualizations are relatively easy and the latency is low. More complex visualizations would require too much computing power, being not practicable for typical augmented reality devices like glasses, smartphones, or tablets.
Approach 2: The augmented reality device connects locally, e.g. via Wi-Fi ^{®} and VNC ^{®}, or Wi-Fi ^{®} and HTML, to a local HMI server, which provides a 2D-visualization of the data to be shown. The device then shows this as floating virtual screens within the augmented reality environment, e.g. next to the sensors that they refer to. This is particularly useful for locally available process overview data, e.g. from a PCS HMI, as the augmented reality device does not have to perform very complex rendering tasks, and the latency is still fairly low.
Approach 3: The device connects via the cloud, e.g. via LTE and HTTP, to a server which then provides a 2D-visualization of data to be shown. The device then shows this as floating virtual screens within the augmented reality environment, e.g. next to the sensors that they refer to. This is particularly useful for analytics data which is often computed in the cloud, and which does not require a low latency.

All of these approaches do not scale to a large amount of data.

An objective of the present invention is the ability to show a large amount of information by an augmented reality device wherein the augmented reality device does not have to comprise large computational resources.

The problem is solved by a method of displaying information on an augmented reality device according to claim 1. Further, the problem is solved by an augmented reality system according to claim 12. Advantageous aspects of the invention are the subject of the dependent claims.

According to the invention, the method of displaying information on an augmented reality device comprises the following steps:
a) By a user of the augmented reality device or, automatically, by the augmented reality device and/or a further device connected to the augmented reality device, determining a hologram which is located within an augmented reality environment of the augmented reality device,
b) By the user or by a further user, determining which information shall be displayed within the hologram,
c) Transmitting the determinations of the user, or of the user and the further user, to a computing unit which may be physically separated from the augmented reality device,
d) Generating an image of the information determined by the user, or by the user and the further user, by the computing unit,
e) Transmitting the generated image to the augmented reality device,
f) Displaying the information determined by the user, or by the user and the further user, by displaying the received image by the augmented reality device.

In a first step a user of the augmented reality device determines a hologram which is located within an augmented reality environment of the augmented reality device. To do this, the user can use a specific determination application which is hosted by the augmented reality device. Also the user can use a computer connected to the augmented reality device which hosts the determination application, and which can transfer the "engineering" information to the augmented reality device which renders the hologram within its augmented reality environment. The augmented reality environment is a three-dimensional space which the augmented reality device uses to place the hologram(s). The augmented reality environment has a specific relation to the real world which has been determined in advance calibrating the augmented reality device. This relation, respectively the calibrating, is not the subject of the present application.

Alternatively, the hologram is determined automatically - by the augmented reality device or by a further device like the computer as mentioned before which is connected to the augmented reality device. The automatic generation can base on some typical presets which suit for most of the users.

A hologram is a 2D or 3D object which can be filled with various information. So to say, the hologram is like a picture frame which can be filled with images the user determines. In the course of this invention, the term "hologram" is used for a 2D object which can display the information the user determines.

In addition to the determination of the hologram, the (same) user or a further user determines which information shall be displayed/shown within the hologram.

The determinations of the user, or of the user and of the further user, i.e. the hologram and the information which shall be shown within the hologram, are transmitted to a computing unit which is physically separated from the augmented reality device. "Physically separated" means that the augmented reality device and the computing unit are two separated devices/units wherein each device/unit comprises its own computational resources. In most scenarios "physically separated" also means that the augmented reality device and the computing unit are also located distantly from each other. "Physically separated" can (but it is not mandatory) also mean that there is no hard wiring based physical connection between the augmented reality device and the computing unit but a wireless connection like Bluetooth ^{®}, Wi-Fi ^{®}, LTE or the like.

Afterwards, the computing unit generates an image of the information determined by the user, or by the user and the further user. Thereby, the image is a graphic file which has a bmp-, jpeg-, gif- or a comparable format. It is only essential that the augmented reality device which the image is transmitted to in a following step can handle the image (file) and that the image is compatible with the hologram in which it shall be shown.

According to the invention, the information is shown to the user (or the further user) by means of showing an image of the information. The image (file) is rather small, typically within a size range from few Kilobytes to 10 Megabyte. Thereby, the augmented reality device can handle the image easily without the need of having large computational resources.

For the user, it does not make a difference if he views the original information (file) or the image (i.e. a semi-live view), as long as the resolution is sufficient, which needs to be ensured obviously.

Preferably, steps d) through f) are repeated cyclically at a specific repeating rate, preferably every minute, most preferably every 5 to 30 seconds. This can be done to update/refresh the image of the information which is in particular relevant for information which change in time (like measuring values, diagrams, key performance indicators and so on).

The repeating rate can depend on a type of the information, on a bandwidth of a connection between the computing unit and the augmented reality device, or on a number of users which are demanding the information from the computing device. For example, a higher repeating rate can be chosen if an update rate of the (underlying) information is rather high. The repeating rate can also be adjusted to the fact how many users of an amount of many users are interested in having shown a specific information.

Not only steps d through f can be repeated. It is also possible to perform steps a through f several times, wherein the location of the hologram and/or the information which shall be displayed within the hologram is varied each time by the user (or, optionally, the further user). By performing all steps several times the user (or the further user) can determine a plurality of holograms which show (the same or different) information. Obviously, these holograms should be located at different locations within the augmented reality environment.

The computing unit can be part of a cloud computing infrastructure. Most preferably, the computing unit is initiating a web browser session to get access to the determined information. Thereby, the web browser session which is hosted by a further computing unit which is physically separated from the augmented reality device and from the computing unit, wherein the computing unit creates a screenshot of the web browser session to generate the image.

Advantageously, the web browser session which allows an access to the determined information is hosted by the augmented reality device at least temporarily if the user gives an according command to the computing unit, especially by clicking on the hologram. As the augmented reality technology (used by the augmented reality device) is mostly used to view relevant information, in many cases no interaction with the shown image is necessary at all. However, if it's necessary to modify or interact, clicking on the image could open the information (document) in a respective application or show the web page in a browser session. But, in comparison to other approaches being state-of-the-art, only very few active applications are necessary so that no scaling problems occur for the augmented reality device.

Preferably, the computing unit uses a low code application to get access to the determined information and to generate the image of the information. Thereby, a low code application is characterized in that graphical/visual tools are used to construct instructions readable by the computing unit to perform the steps as described above. The benefit of this solution is that it is relatively easy to update the content at any time in a comfortable manner inside the low code application.

Most preferably, the user (or the further user) can configure the low code application via means of the augmented reality device. This procedure is very simple and easy to handle for the user. To realize this simple configuration, the augmented reality device can generate graphical control fields within the augmented reality environment the user can use to configure the low code application.

The problem as described above is also solved by an augmented reality system, comprising at least one augmented reality device and at least one computing unit, being physically separated from the augmented reality device, wherein the augmented reality system is configured to perform a method as described above.

Features of examples of the present disclosure will become apparent by reference to the following detailed description of the drawings. For the sake of brevity, reference numerals or features having a previously described function may or may not be described in connection with other drawings in which they appear.
- FIG 1: shows a method according to the invention in a schematic view; and
- FIG 2: is a perspective view of a user using an augmented reality device.

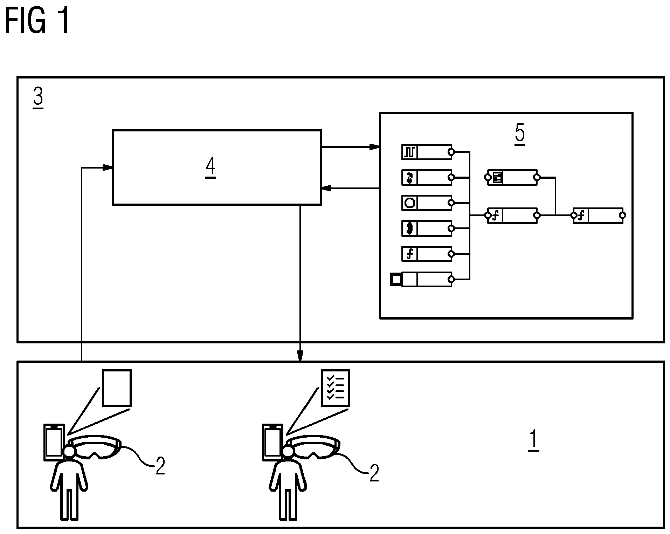

In FIG 1 there is depicted a schematic overview over a method of displaying information on an augmented reality device according to the invention. In a lower part 1 of FIG 1 steps are performed in a context of an augmented reality device 2. In an upper part 3 of FIG 1 steps are performed in a context of a cloud computing infrastructure 4.

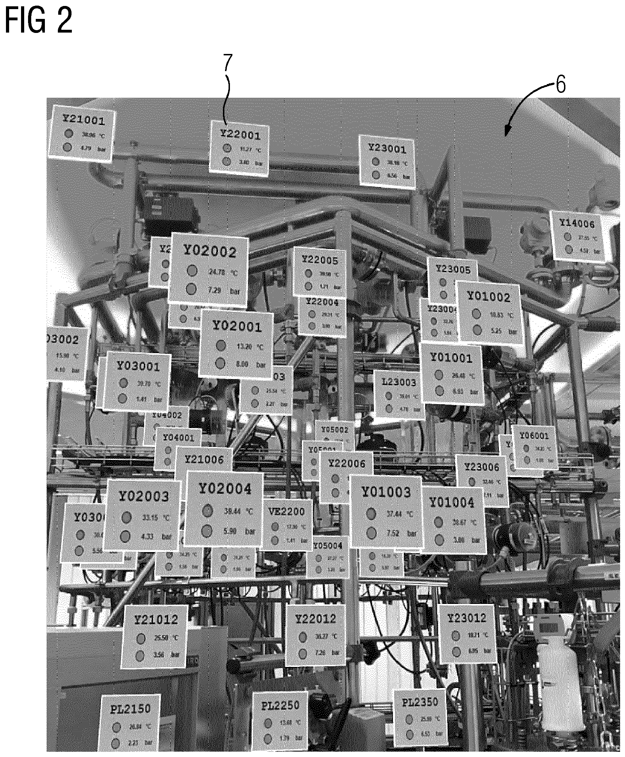

In a first step (1) a user places a hologram for a semi-live view in an augmented reality environment (cf. FIG 2) using the mobile augmented reality device 2, such as a smartphone, tablet, or head-mounted display. Besides secondary parameters he specifies/determines the (source of) information, e.g. a certain screen area of a web page, he wants to be shown within the hologram.

The determinations made by the user are transmitted to a computing unit being part of the cloud computing infrastructure 4 (step (2)). The transmission is done using a Wi-Fi ^{®} connection 5.

The computing unit in the cloud computation infrastructure 4 runs a low code application 5, e.g. Node-RED ^{®}. Using the low code application 5 the cloud computing unit gets access to the determined information. For getting access to the determined information, which are for example stored in a storing unit of a technical plant, one and the same user management of the augmented reality device 2 and the source of unit of the information can be used and the user data with which the user logs on to the computing unit is also used for authenticating the user to get access to the determined data.

In a following step (3) in the low code application 5 an image of the determined information is generated and transmitted to the computing unit. The computing unit transmits the generated image to the augmented reality device in a following step (4). Finally, the augmented reality device 2 shows the image within the determined hologram in the augmented reality environment of the augmented reality device 2.

According to one aspect of the invention, the user is able to modify an existing low code semi-live workflow. Standing in an industrial plant, much information is related to certain objects in the plant. As a very intuitive interaction, the user could just grab a component and attach it to an existing hologram. Thereby, the information (source) is changed from the original one to the new one, if possible. That could be the user's guide as well as the measurement value of the electronics temperature for example. This allows the user to directly configure his augmented reality view by means of the augmented reality device 2 to reach his own needs - with very little time effort and very flexible during operation.

In addition, not only the information (source) can be changed using the augmented reality device 2. Also the low code workflow could be adapted. As the programming already is a graphical one, it's very easy to adjust it on the fly within the normal programming environment but on the user's device, i.e. the augmented reality device 2. The user even does not need to leave the augmented reality view in the augmented reality device 2 but the low code programming is directly performed in the augmented reality environment. The interaction steps of the low code application 5 could be moved like real objects and a completely new visualization could be created on the fly.

FIG 2 shows an augmented reality environment 6, i.e. the augmented reality views the user has when he uses the augmented reality device 2 described above. A plurality of holograms 7 are located within the augmented reality environment 6. Each hologram 7 shows measuring (process) values of a process object of a process plant. Thereby, within each hologram 7 there is depicted an image of the respective information (source) as it is described above.

While several examples have been described in detail, it is to be understood that the disclosed examples may be modified. Therefore, the foregoing description is to be considered nonlimiting.

## Claims

1. Method of displaying information on an augmented reality device (2), comprising:
a) By a user of the augmented reality device (2) or, automatically, by the augmented reality device (2) and/or a further device connected to the augmented reality device (2), determining a hologram (7) which is located within an augmented reality environment (6) of the augmented reality device (2),
b) By the user or by a further user, determining which information shall be displayed within the hologram (7),
c) Transmitting the determinations of the user, or of the user and the further user, to a computing unit which is physically separated from the augmented reality device (2),
d) Generating an image of the information determined by the user, or by the user and the further user, by the computing unit,
e) Transmitting the generated image to the augmented reality device (2),
f) Displaying the information determined by the user, or by the user and the further user, by displaying the received image by the augmented reality device (2).

2. Method according to claim 1, wherein steps d) through f) are repeated cyclically at a specific repeating rate, preferably every minute, most preferably every 5 to 30 seconds.

3. Method according to claim 2, wherein the repeating rate depends on a type of the information, on a bandwidth of a connection between the computing unit and the augmented reality device (2), or on a number of users which are demanding the information from the computing device.

4. Method according to one of the preceding claims, wherein steps of a) through f) are performed several times, wherein the location of the hologram (7) and/or the information which shall be displayed within the hologram (7) is varied each time by the user.

5. Method according to one of the preceding claims, wherein the computing unit is part of a cloud computing infrastructure (4).

6. Method according to one of the preceding claims, wherein the computing unit is initiating a web browser session to get access to the determined information, wherein the web browser session is hosted by a further computing unit which is physically separated from the augmented reality device (2) and from the computing unit, wherein the computing unit creates a screenshot of the web browser session to generate the image.

7. Method according to claim 6, wherein the web browser session which allows an access to the determined information is hosted by the augmented reality device (2) at least temporarily if the user gives an according command to the computing unit, especially by clicking on the hologram (7).

8. Method according to one of claims 1 to 5, wherein the computing unit uses a low code application (5) to get access to the determined information and to generate the image of the information.

9. Method according to claim 8, wherein the user can configure the low code application (5) via means of the augmented reality device (2).

10. Method according to claim 9, wherein the augmented reality device (2) generates graphical control fields within the augmented reality environment (6) the user can use to configure the low code application (5).

11. Method according to one of the preceding claims, wherein the augmented reality device (2) are augmented reality glasses, virtual reality glasses, a smartphone, or a tablet.

12. Augmented reality system, comprising at least one augmented reality device (2) and at least one computing unit, being physically separated from the augmented reality device (2), wherein the augmented reality system is configured to perform a method according to one of claims 1 through 11.
